# EUROPÄISCHE PATENTANMELDUNG

(11) **EP 0 819 594 A1**
(43) Veröffentlichungstag der Anmeldung: **21.01.1998**
(21) Anmeldenummer: 97112187.6
(22) Anmeldetag: 16.07.1997
(51) Int. Cl.: B62B 5/06

(54) **Schiebegriff für Transportwagen**

(30) Priorität: 16.07.1996 DE 29612191 U
(71) Anmelder: Wanzl GmbH & Co. Entwicklungs-KG, D-89336 Leipheim (DE)
(72) Erfinder: Wanzl, Rudolf, 89340 Leipheim (DE)

(57) **Zusammenfassung**

Die Erfindung betrifft einen Transportwagen (1), insbesondere einen Einkaufswagen, dessen Schiebeeinrichtung (7) zwei Griffe (8) aufweist, die auf Trägern (4) angeordnet sind.
An jedem Griff (8) ist ein Befestigungsbereich (10) zur Aufnahme einer die Griffe (8) verbindenden Querstange (14) vorgesehen.

## Beschreibung

Die Erfindung betrifft einen Transportwagen, insbesondere einen Einkaufswagen, dessen Schiebeeinrichtung zwei Griffe aufweist, die auf Trägern angeordnet sind.

Transportwagen, deren Griffe in der eben geschilderten Weise angeordnet oder gestaltet sind, lassen sich mit beiden Händen sehr leicht und angenehm rangieren, Versucht man das Bewegen des Transportwagens nur mit einer Hand durchzuführen, wird daraus ein mühsames Unterfangen vor allem dann, wenn der Transportwagen mit vier Lenkrollen ausgestattet ist.

Die Aufgabe der Erfindung besteht darin, bei einem Transportwagen der gattungsgemäßen Art Maßnahmen vorzusehen, durch welche sich der eben geschilderte Nachteil vermeiden läßt.

Die aufzufindenden Maßnahmen bestehen darin, daß an jedem Griff ein Befestigungsbereich zur Aufnahme einer die Griffe verbindenden Querstange vorgesehen ist.

Durch die Anordnung von Befestigungsbereichen an den Griffen ist es nun möglich, bei Bedarf eine als weiteren Schiebegriff dienende Querstange an den Griffen anzuordnen, so daß der Transportwagen durch Halten der Querstange auch mit nur einer Hand bequem geschoben und gezogen werden kann.

Die Erfindung wird anhand eines Ausführungsbeispieles näher erläutert.
Es zeigt
Fig. 1 einen Transportwagen ohne Querstange und
Fig. 2 den gleichen Transportwagen mit einer Querstange.

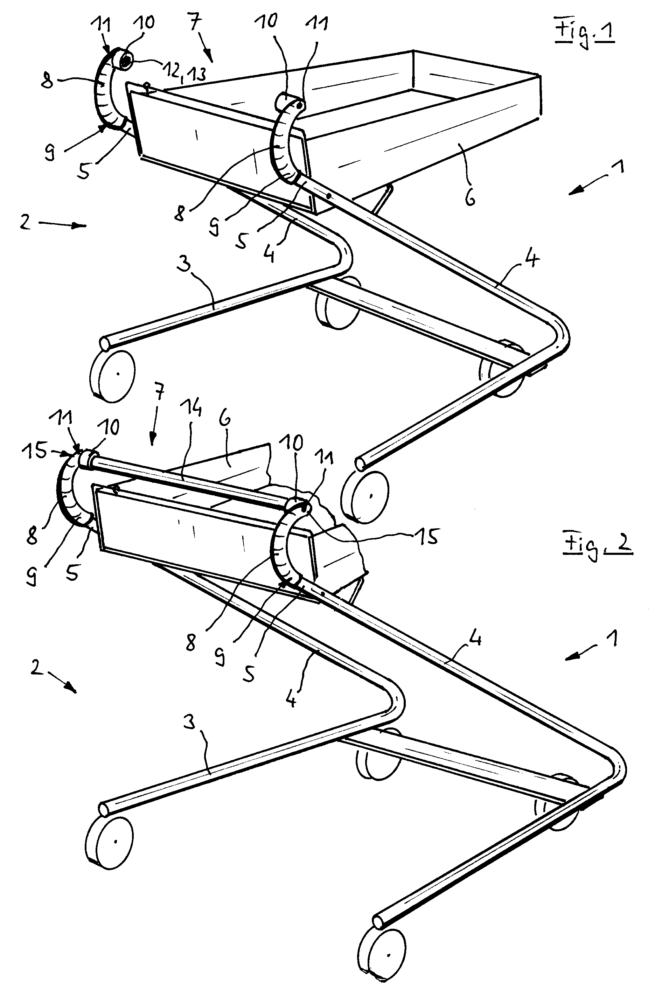

Der in Fig. 1 dargestellte Transportwagen 1, der die bevorzugte Form eines Einkaufswagens besitzt, weist ein Fahrgestell 3 und wenigstens eine Abstelleinrichtung 6 zum Transport von Gütern, Ware und dergleichen auf. Der Transportwagen kann in bewährter Weise so gestaltet sein, daß er sich mit gleichen Transportwagen 1 platzsparend ineinanderschieben läßt. Der Transportwagen 1 weist an beiden Seiten je einen Träger 4 auf, die im Beispiel nach oben und zum rückwärtigen Ende 2 des Transportwagens 1 streben. Andere Anordnungen der Träger 4, z.B. senkrecht nach oben oder waagrecht nach hinten sind möglich. An den Enden 5 der Träger 4 ist je ein Griff 8 angeordnet. Die Griffe 8 üben die Funktion einer Schiebeeinrichtung 7 aus. Im Beispiel liegt der Befestigungsbereich 9 der Griffe 8 tiefer als deren oberer Endbereich 11. Die Griffe 8 nehmen eine in Schieberichtung des Transportwagens 1 schräg nach oben gerichtete Lage ein. An jedem Griff 8 ist ein Befestigungsbereich 10 zur Aufnahme einer die Griffe 8 verbindenden Querstange 14 vorgesehen, wobei der Befestigungsbereich 10 bevorzugt am oberen Endbereich 11 angeordnet ist. Der Befestigungsbereich 10 der Griffe 8 ist hohl ausgebildet, wobei in dem dadurch gebildeten Aufnahmeraum 12 beispielsweise ein spreizdübelartiger Zapfen 13 angeordnet sein kann, der sich in bekannter Weise dann aufspreizt und sich gegen die Innenwand der rohrförmigen Querstange 14 stemmt, wenn eine Schraube 15 zentral in den Zapfen 13 eingeschraubt wird.
Anstelle eines hohlen Befestigungsbereiches 10 ist es gemäß einem nicht näher dargestellten Ausführungsbeispiel möglich, den Befestigungsbereich 10 wannenförmig zu gestalten und die an der Außenseite des Transportwagens 1 angeordnete Seite der Vertiefung durch eine vertikale Wand abzuschließen. Die Querstange kann dann mit ihren beiden Enden schnappschlüssig in die Vertiefungen der beiden Griffe 8 eingerastet werden. Der kreisabschnittförmige Querschnitt der Vertieffingen müßte dann z.B. einen Winkel von etwas mehr als 180° beschreiben.

Fig. 2 zeigt den gleichen Transportwagen 1 mit Querstange 14. Die Enden der Querstange 14 sind in die Endbereiche 11 der Griffe 8 eingesetzt und mit Hilfe von Schrauben 15 mit den Zapfen 13 verspannt. Die Querstange 14 bildet nun eine Griffstange zum Schieben oder Ziehen des Transportwagens 1. Diese optimale Lösung bietet dem Benutzer verschiedene Möglichkeiten zur Handhabung des Transportwagens 1. Der Benutzer kann mit beiden Händen die Griffe 8 anfassen, er kann mit beiden Händen die Querstange 14 halten, er kann aber auch mit nur einer Hand den Transportwagen 1 schieben, insbesondere aber ziehen.

Die Erfindung läßt verschiedene Formen von Griffen 8 zu, beispielsweise solche, die im deutschen Gebrauchsmuster 295 08 411.1 beschrieben sind und eine bügelförmige Form besitzen. Auch bei diesen Griffen 8 kann oberhalb des Befestigungsbereiches 9 und bevorzugt am oberen Endbereich 11 ein weiterer Befestigungsbereich 10 zur Aufnahme einer die Griffe 8 verbindenden Querstange 14 vorgesehen sein. Der Befestigungsbereich 9 ist bei diesen Griffen 8 bevorzugt durch zwei Zapfen gebildet, die in den Trägern 4 arretiert sind.

Je nach Ausgestaltung der Befestigungsbereiche 10 ist es von Vorteil, bei einem Transportwagen 1, der nur zwei Griffe 8 und keine Querstange 14 aufweist, die hohlen oder als Vertieffingen gestalteten Befestigungsstellen 10 durch geeignete, nicht näher dargestellte Verschlußstücke zu verschließen. Solche bevorzugt aus Kunststoff gefertigten Verschlußstücke können aufgeklipst oder aufgesteckt oder aufgeschraubt werden, um die Öffnungen oder Vertiefungen der Befestigungsbereiche 10 abzudecken.

## Patentansprüche

1. Transportwagen (1), insbesondere Einkaufswagen, dessen Schiebeeinrichtung (7) zwei Griffe (8) aufweist, die auf Trägern (4) angeordnet sind, dadurch **gekennzeichnet**, daß an jedem Griff (8) ein Befestigungsbereich (10) zur Aufnahme einer die Griffe (8) verbindenden Querstange (14) vorgesehen ist.

2. Transportwagen nach Anspruch 1, dadurch **gekennzeichnet**, daß der Befestigungsbereich (10) am oberen Endbereich (11) der Griffe (8) angeordnet ist.

3. Transportwagen nach Anspruch 1 oder 2, dadurch **gekennzeichnet**, daß der Befestigungsbereich (10) hohl ist.

4. Transportwagen nach Anspruch 1 oder 2, dadurch **gekennzeichnet**, daß der Befestigungsbereich (10) wannenförmig ausgebildet ist.

5. Transportwagen nach einem der Ansprüche 1 bis 4, dadurch **gekennzeichnet**, daß der Befestigungsbereich (10) durch ein Verschlußstück verschließbar ist.
